# FASCICULE DE BREVET EUROPEEN

(11) **EP 4 448 402 B1**
(45) Date de publication et mention de la délivrance du brevet: **05.11.2025**
(21) Numéro de dépôt: 22836139.0
(22) Date de dépôt: 14.12.2022
(51) Int. Cl.: G06Q 10/083, B65D 81/02, B65D 25/20

(54) **COLIS COMPRENANT DES MOYENS D'AFFICHAGE NUMERIQUE**
VERPACKUNG MIT DIGITALEN ANZEIGEMITTELN
PACKAGE COMPRISING DIGITAL DISPLAY MEANS

(30) Priorité: 17.12.2021 FR 2113895
(43) Date de publication de la demande: 23.10.2024
(73) Titulaire: PA.COTTE SA, 1009 Pully (CH)
(72) Inventeur: HUGUES, Pascal, 44700 Orvault (FR); MAFFRE, Nicolas, 44470 Carquefou (FR); COTTE, Pierre-Alain, 92224 Amberg (DE)
(74) Mandataire: reuteler & cie SA
(86) Numéro de dépôt international: PCT/EP2022/085756
(87) Numéro de publication internationale: WO 2023/110964

(56) Documents cités:
- WO-A1-2021/185679
- WO-A1-2021/185792
- CN-B- 106 241 048
- DE-U1- 202012 000 383
- FR-A1- 3 092 829
- US-A1- 2020 410 433

## Description

Le domaine de l'invention est celui de la logistique.

Plus précisément, l'invention concerne la conception et la fabrication d'un colis connecté pour le transport d'objets.

Pour transporter un objet entre deux destinations, les utilisateurs ont souvent recours à des colis qu'ils peuvent suivre en temps réel via des plateformes informatiques.

Les colis sont de plus en plus connectés, c'est-à-dire qu'ils sont à la fois géo-localisables mais également qu'ils permettent l'affichage en temps réel d'informations à destination du livreur pour en faciliter leur livraison.

Pour cela, des colis ont été développés et comprennent notamment des moyens d'affichage numérique d'informations de livraison.

Ces moyens d'affichage numérique, classiquement connus, comprennent un écran sur lequel sont affichés les informations en temps réel.

Plus particulièrement, les colis comprennent une caisse ayant un fond et une bordure périphérique formée de panneaux aboutés les uns aux autres.

La bordure périphérique s'étend depuis le fond pour former un volume de rangement.

Les moyens d'affichage numérique sont intégrés à l'un des panneaux pour être accessibles à un expéditeur, à un livreur ou à un destinataire depuis l'extérieur du colis.

En outre, ces moyens d'affichage sont couplés à un calculateur ou une puce électronique permettant à la fois de recevoir et d'échanger des informations avec un serveur distant, mais également de générer un affichage particulier en fonction de conditions d'utilisation du colis.

A titre d'exemple, en fonction de la zone géographique dans laquelle est situé le colis, les informations affichées par l'écran seront adaptées.

En d'autres termes, lorsque le colis est dans une phase de transit, par exemple dans un container sur des eaux internationales, l'affichage ou les informations affichées sur l'écran peuvent être minimalistes, c'est-à-dire comprendre uniquement un code barre d'identification du colis ainsi qu'un pays de destination.

En revanche, lorsque le colis est situé dans une centrale logistique, les informations affichées sur l'écran peuvent être plus précises et notamment comprendre, outre le code barre d'identification du colis, des informations détaillées quant à la destination du colis, c'est-à-dire un département, une ville, voire une rue et un numéro de rue.

Durant le cycle d'acheminement du colis jusqu'à sa destination finale, les livreurs peuvent être amenés à interagir avec le colis.

Pour cela, les écrans sont généralement associés à des boutons physiques manipulables par le livreur, ou, de plus en plus, sont tactiles.

Dans l'usage, l'appui répété sur les boutons physiques et/ou sur l'écran peut provoquer leur détérioration de manière rapide.

En outre, le stockage des colis durant leur transport dans des véhicules peut engendrer, en cas de route accidentée ou de changement de direction brutal du véhicule, un déplacement incontrôlé d'un colis dans le véhicule qui vient alors heurter d'autres colis par exemple.

Cela peut engendrer une destruction de l'écran ou, à tout le moins, une dégradation partielle de l'écran qui empêche soit l'identification du colis, soit la lecture des informations de livraison et donc, le cas échéant, la bonne livraison du colis à son destinataire.

De plus, lorsque l'endommagement des moyens d'affichage numérique intervient en pleine livraison d'un colis, il peut arriver que le colis ne puisse pas être livré à son destinataire pour défaut d'identification du colis ou défaut d'inscriptions de livraison lisibles par le livreur.

Il est alors nécessaire de retourner le colis à l'expéditeur pour effectuer un nouveau colisage pour le même destinataire.

Cela est alors néfaste pour l'image de marque de l'émetteur du colis, l'image de marque de la société de livraison et cela n'est pas du goût du destinataire qui subit un retard dans la livraison de son colis.

En outre, il est nécessaire de remplacer au minimum l'écran des moyens d'affichage numérique pour permettre une nouvelle utilisation du colis.

Cela engendre un coût de réparation qui peut être important et potentiellement un risque de pollution lors d'une phase de recyclage des moyens d'affichage numérique remplacés, puisque tous leurs composants peuvent ne pas être intégralement recyclables.

Les solutions classiques du type film protecteur posé sur l'écran permettent de limiter l'apparition de rayures par exemple sur l'écran, mais n'offrent pas une garantie de protection suffisante face aux chocs que peuvent subir les moyens d'affichage numérique.

Par exemple, le document FR3092829A1 divulgue une tel colis commune pour le transport d'objets avec des moyens d'affichage numérique conforme au préambule de la revendication 1 annexée.

L'invention a notamment pour objectif de pallier les inconvénients de l'art antérieur.

Plus précisément, l'invention a pour objectif de proposer une solution qui permette de protéger les moyens d'affichage numérique intégrés à un colis vis-à-vis des chocs qu'ils peuvent subir lors de la livraison du colis ou, à tout le moins, de limiter les effets néfastes des chocs sur les moyens d'affichage numérique.

L'invention a également pour objectif de fournir une telle solution qui soit facile d'intégration dans un colis.

L'invention a en outre pour objectif de fournir une telle solution qui soit légère et qui permette de conserver un bon volume de stockage interne au colis.

Ces objectifs, ainsi que d'autres qui apparaîtront par la suite, sont atteints grâce à l'invention qui a pour objet un colis pour transport d'objet, comprenant :
- une caisse ayant un fond et une bordure périphérique formée de panneaux aboutés les uns aux autres,
- des moyens d'affichage numérique, permettant d'afficher des informations de livraison du colis,

les moyens d'affichage numérique étant intégrés à l'un des panneaux pour être accessibles depuis l'extérieur du colis,
les moyens d'affichage numérique comprenant :
   - une coque ayant une paroi avant côté extérieur du colis et une paroi arrière côté intérieur du colis ;
   - un écran monté mobile dans la coque entre la paroi avant et la paroi arrière, et
   - un système d'amortissement comprenant un amortisseur intercalé entre l'écran et la coque, pour amortir le déplacement de l'écran depuis la paroi avant vers la paroi arrière caractérisé en ce que le système d'amortissement comprend également une enveloppe élastiquement déformable entourant la coque, l'enveloppe amortissant le déplacement des moyens d'affichage numérique depuis l'extérieur du colis vers l'intérieur, et inversement.

L'amortisseur et l'enveloppe forment respectivement un premier niveau d'amortissement et un deuxième niveau d'amortissement des moyens d'affichage numérique.

Ainsi, lorsque tous les efforts appliqués sur l'écran ne sont pas absorbés par l'amortisseur, l'enveloppe peut se déformer pour absorber une autre partie des efforts et ainsi protéger l'écran des moyens d'affichage numérique.

Selon un aspect avantageux, le panneau sur lequel sont intégrés les moyens d'affichage numérique comprend :
- un squelette duquel est solidaire l'enveloppe,
- une peau dans laquelle est noyé le squelette, la peau étant réalisée dans un matériau élastiquement déformable.

Cette architecture du panneau permet de former un troisième niveau d'amortissement des moyens d'affichage numérique.

En effet, la peau du panneau peut se déformer pour permettre d'absorber une partie des efforts appliqués sur l'écran, en parallèle des deux premiers niveaux d'amortissement.

En outre, le squelette assure une bonne rigidité au panneau en permettant la connexion mécanique, notamment une bonne transmission des efforts, entre tous les éléments du panneau. Cela évite donc une concentration de contraintes mécaniques en quelques points seulement lorsqu'un effort est exercé sur l'écran par exemple, une telle concentration pouvant provoquer une rupture du panneau.

Selon un autre aspect avantageux, la peau est réalisée en polypropylène expansé.

Le polypropylène expansé offre une bonne résistance mécanique tout en gardant une souplesse permettant sa déformation.

Les panneaux sont donc à la fois robustes et souples pour assurer leur déformation et ainsi protéger les moyens d'affichage numérique.

Selon un autre aspect avantageux, l'amortisseur comprend une mousse compressible de type à absorption de chocs.

La mousse compressible à absorption de chocs assure l'absorption de l'énergie d'impact sur l'écran, par exemple lorsqu'un utilisateur exerce un effort pour interagir avec l'écran ou lors d'un choc sur l'écran, tout en offrant un poids contenu.

Selon un autre aspect avantageux, la mousse compressible présente une dureté de type Shore O comprise entre 16 et 22.

Une telle dureté assure la bonne absorption des efforts appliqués sur l'écran des moyens d'affichage numérique sans autoriser un enfoncement trop important de l'écran à l'intérieur du colis.

Il en ressort également un aspect qualitatif du colis puisque, lorsque l'écran est enfoncé suite à un choc ou un appui trop fort de la part d'un utilisateur, il recouvre sa position initiale une fois l'effort exercé interrompu, ce qui permet d'éviter un aspect abîmé du colis.

Selon un autre aspect avantageux, les moyens d'affichage numérique comprennent également :
- une carte électronique solidaire de la paroi arrière de la coque ;
- une plaque métallique s'étendant entre l'écran et la carte électronique, l'amortisseur étant intercalé entre la plaque métallique et l'écran.

Grâce à cette architecture, un ensemble numérique peut être formé, comprenant la carte électronique, la plaque métallique, l'écran et le système d'amortissement, la carte électronique pouvant alors être solidaire de la plaque métallique.

Ainsi, en cas de réparation des moyens d'affichage numérique, par exemple lorsque la coque seule est endommagée ou que l'écran seul est endommagé, il est possible de ne remplacer qu'une partie seulement des moyens d'affichage numérique, par exemple l'ensemble numérique précité, au bénéfice du coût de réparation, mais également de la limitation des déchets produits.

Selon un autre aspect avantageux, la paroi arrière de la coque présente des barres de renfort faisant saillie vers l'intérieur de la coque, les barres de renfort formant des supports de la carte électronique.

Ainsi, lorsque la carte électronique est montée dans la coque, elle est supportée par la paroi arrière de la coque, au moins autour de l'écran, ce qui permet d'éviter un jeu entre la coque, et plus précisément la paroi arrière de la coque, et la carte électronique, jeu qui peut à terme engendrer des dommages de la carte électronique, notamment à cause de vibrations liées au transport du colis.

En revanche, sous l'écran, la carte électronique est prise en sandwich entre la plaque métallique et les barres de renfort, ce qui permet que la coque soit plus résistante et offre une meilleure résistance et une meilleure protection de la carte électronique et de l'écran.

Selon un autre aspect avantageux, les barres de renfort sont positionnées sous la forme d'un quadrillage formant des logements de réceptions de composants électriques solidaires de la carte électronique.

Un tel quadrillage augmente la résistance mécanique de l'ensemble notamment entre la coque avant et la coque arrière autour de l'écran, et entre la coque arrière et la plaque métallique sous l'écran.

Selon un autre aspect avantageux, les moyens d'affichage comprennent une protection en verre trempé recouvrant l'écran, la protection en verre trempé étant intercalée entre l'écran et la paroi avant de la coque.

Une telle protection en verre trempé permet de protéger l'écran d'une éventuelle casse due à un impact (notamment à cause d'une flexion de l'écran ou d'un poinçonnement localisé).

Par ailleurs, la protection en verre trempé peut être retirée le cas échéant pour être changée lorsqu'elle est usée.

Selon un autre aspect avantageux, l'enveloppe est réalisée dans un matériau élastomère.

L'enveloppe peut ainsi se déformer et recouvrer sa forme initiale malgré une multitude de déformations.

En outre, l'utilisation d'un matériau en élastomère offre une souplesse dans le déplacement des moyens d'affichage numérique, par exemple un accompagnement des mouvements de l'utilisateur lorsque celui-ci appuie sur l'écran.

Selon un autre aspect avantageux, le matériau élastomère est du type thermoplastique comprenant une dureté shore A comprise entre 25 et 35.

Ce type de matériau offre l'élasticité et la légèreté souhaitées pour garantir une bonne protection des moyens d'affichage numérique tout en conservant un poids contenu du colis.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] est une vue en perspective de dessus d'un colis selon l'invention ;
[Fig. 2] est une vue éclatée des moyen d'affichage du colis selon l'invention, selon le deuxième mode de réalisation ;
[Fig. 3] est une vue en coupe transversale de moyens d'affichage numérique du colis selon l'invention.

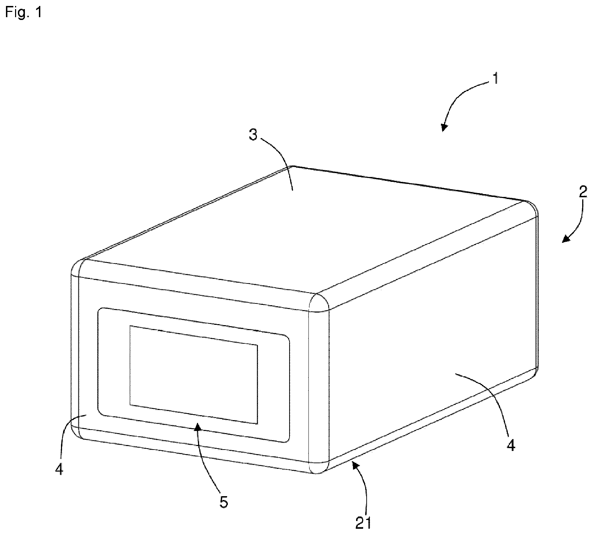

La figure 1 illustre un colis 1 selon l'invention.

Un tel colis 1 comprend une caisse 2.

La caisse 2 comprend un fond 21 et un rebord périphérique formé d'une pluralité de panneaux 4 aboutés les uns aux autres.

En outre, le colis 1 comprend un couvercle 3 permettant de refermer un volume de rangement interne au colis. Ce volume de rangement interne est délimité par le fond 21 et le rebord périphérique formé par les panneaux 4.

Ce volume de rangement interne permet de recevoir des objets à transporter entre une adresse d'origine et une adresse de destination.

Pour permettre l'acheminement du colis 1 à son adresse de destination, le colis 1 comprend une zone d'affichage des informations de destination.

Plus particulièrement, cette zone d'affichage comprend des moyens d'affichage numérique 5 solidarisés à l'un des panneaux 4 de la caisse 1.

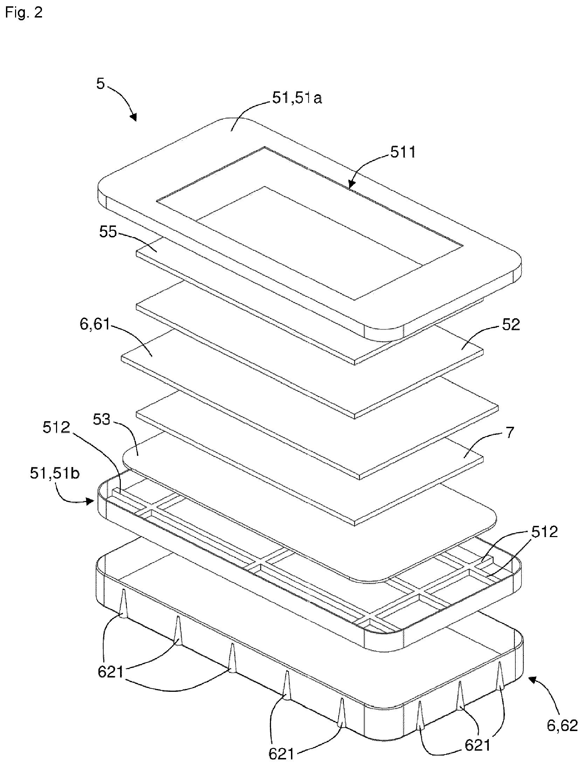

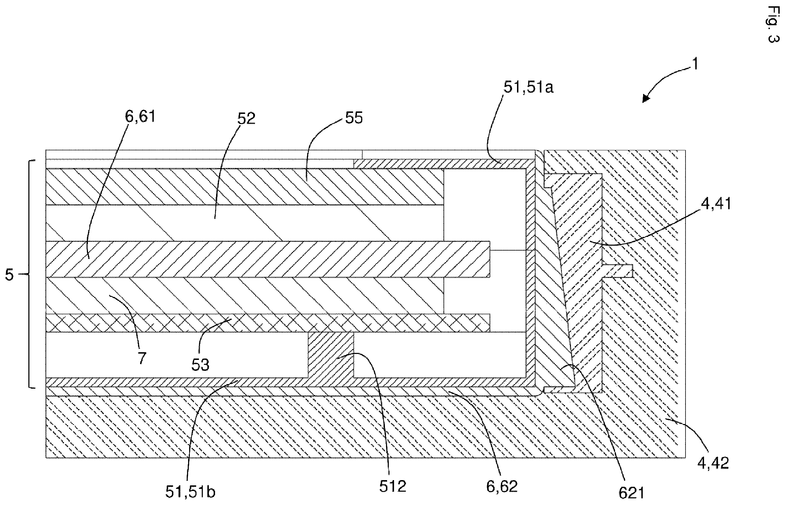

En référence aux figures 2 et 3, les moyens d'affichage numérique 5 comprennent :
- une coque 51;
- un écran 52 ;
- une carte électronique 53 à laquelle est raccordé électriquement l'écran 52, la carte électronique 53 étant destinée à transmettre des instructions d'affichage à l'écran 52 ;
- une plaque métallique 7 ;
- une protection 55 en verre trempé.

Plus précisément, la coque 51 comprend une paroi avant 51a située du côté extérieur du colis 1 et une paroi arrière 51b opposée à la paroi avant 51a, et située du côté intérieur du colis 1.

La paroi avant 51a et la paroi arrière 51b comprennent chacune une bordure latérale destinées à être aboutées pour former à l'intérieur de la coque un espace de réception d'au moins l'écran 52 et la carte électronique.

De plus, la paroi avant 51a présente une ouverture 511 permettant un accès et une visibilité de l'écran 52 logée dans la coque 51.

Tel que cela est visible sur les figures 2 et 3, la protection 55 en verre trempé est positionnée entre la paroi avant 51a de la coque 51 et l'écran 52.

Plus précisément, la protection 55 en verre trempé est positionnée contre la paroi avant 51a de la coque 51 de sorte à couvrir l'ouverture 511 et, ainsi, empêcher l'accès direct à l'écran 52 depuis l'extérieur de la coque 51.

En d'autres termes, la protection 55 en verre trempé recouvre l'écran 52.

Tel que cela est visible sur la vue en éclaté de la figure 2, la paroi arrière 51b de la coque 51 présente des barres de renfort 512, formant des nervures, faisant saillie vers l'intérieur de la coque 51.

Les barres de renfort 512 forment des supports de la carte électronique 53 permettant de maintenir celle-ci en position dans la coque 51 et d'augmenter la résistance mécanique des moyens d'affichage numérique 5 sous l'écran 52.

Plus précisément, les barres de renfort 512 sont positionnées sous la forme d'un quadrillage formant des logements de réception de composants électroniques solidaires de la carte électronique 53.

La résistance mécanique des moyens d'affichage numérique 5 est également améliorée autour de l'écran 52, notamment entre les barres de renfort 512 qui emprisonnent entre elles la carte électronique 53.

La carte électronique 53 est solidarisée à la paroi arrière 51b par l'intermédiaire de fixations souples. Ces fixations souples autorisent alors un déplacement sans contrainte de la carte électronique 53 afin de minimiser les élongations de la carte électronique dans des zones d'implantation de composants sensibles. Sous l'écran 52, la carte électronique 53 est avantageusement prise en sandwich entre la plaque métallique 7 et la paroi arrière 51b.

A titre d'exemple, les fixations souples sont obtenues par la présence de trous oblongs sur la carte électronique 53 et d'organes de retenue solidaires de la paroi arrière 51b de la coque 51, les organes de retenue étant reçus dans les trous oblongs pour permettre un déplacement maîtrisé de la carte électronique 53 par rapport à la paroi arrière 51b.

Pour éviter une détérioration de l'écran 52 causée par un appui de forte intensité de la part d'un utilisateur ou par un objet venant choquer l'écran 52, les moyens d'affichage numérique 5 comprennent également un système d'amortissement 6.

Ce système d'amortissement 6, qui est intercalé entre l'écran 52 et la coque 51, tend à amortir le déplacement de l'écran 52 depuis la paroi avant 51a vers la paroi arrière 51b.

Le système d'amortissement 6 comprend un amortisseur 61. L'amortisseur 61 est avantageusement formé d'une couche de mousse compressible de type à absorption de chocs.

De préférence, la mousse compressible présente une dureté de type Shore O comprise entre 16 et 22.

L'utilisation d'une mousse compressible de type à absorption de chocs permet qu'après déformation, la mousse tende à recouvrer sa configuration initiale de manière douce, c'est-à-dire de manière progressive dans le temps, évitant ainsi un déplacement trop brutal de l'écran 52 en direction de la paroi avant 51a. En d'autres termes, une mousse compressible de type à absorption de chocs forme un amortisseur réutilisable, permettant une protection durable des moyens d'affichage numérique 5.

En outre, comme cela est visible sur la figure 2, les moyens d'affichage numérique 5 comprennent également une plaque métallique 7.

Cette plaque métallique 7 est positionnée entre l'écran 52 et la carte électronique 53.

La plaque métallique, par exemple réalisée en aluminium ou dans un alliage d'aluminium, pour assurer une protection de la carte électronique 53. L'utilisation d'aluminium ou d'un alliage d'aluminium permet de limiter le poids des moyens d'affichage numérique 5.

En variante, la plaque métallique peut également être réalisée dans un alliage de magnésium, qui offre une rigidité supérieure à l'aluminium ou à un alliage d'aluminium tout en présentant un poids inférieur.

Tel que cela est visible sur les figures 2 et 3, le système d'amortissement 6 est intercalé entre l'écran 52 et la plaque métallique 7.

En référence à la figure 3, on constate alors que la coque 51 contient, depuis la paroi avant 51a vers la paroi arrière 51b :
- la protection 55 en verre trempé ;
- l'écran 52 ;
- l'amortisseur 61 ;
- la plaque métallique 7, et
- la carte électronique 53.

Cet assemblage permet de conférer un premier amortissement des moyens d'affichage numérique 5 puisque, lorsqu'un effort est appliqué sur ceux-ci, cet effort est atténué en étant appliqué successivement aux différents éléments comme suit :
- la protection 55 en verre trempé ;
- l'écran 52 ;
- l'amortisseur 61 ;
- la plaque métallique 7, et
- la carte électronique 53.

Grâce à la présence de la protection 55 en verre trempé, l'écran 52 est protégé d'efforts trop violents, et la carte électronique 53 est protégée par la présence de l'amortisseur 61 du système d'amortissement 6. Par ailleurs, par sa rigidité, la plaque métallique 7 permet de limiter la déformation de la carte électronique 53.

L'amortisseur 61 forme ainsi un premier niveau d'amortissement des moyens d'affichage numérique 5.

Pour améliorer encore leur protection contre les efforts importants, le système d'amortissement 6 comprend également une enveloppe 62 élastiquement déformable. L'enveloppe 62 entoure la coque 51 tel que cela est visible sur les figures 2 et 3.

L'enveloppe 62 permet d'amortir le déplacement des moyens d'affichage numérique 5 depuis l'extérieur du colis 1 vers l'intérieur, et inversement.

En référence aux figures 2 et 3, l'enveloppe 62 présente, sur sa périphérie, une pluralité d'ergots 621.

Ces ergots 621, permettent la retenue de l'enveloppe dans le panneau 4.

Selon la forme de réalisation illustrée sur les figures 2 et 3, les ergots présentent une forme tronconique. Toutefois, d'autres formes pourraient également être utilisées.

L'enveloppe 62 est avantageusement réalisée dans un matériau élastomère.

A titre d'exemple, le matériau élastomère est du type thermoplastique comprenant une dureté shore A comprise entre 25 et 35.

Avantageusement, ce type de matériau est plus largement choisi dans la famille des TPU, c'est-à-dire dans la famille des matériaux thermoplastiques élastomères qui allient les propriétés élastiques des élastomères et les propriétés mécaniques des thermoplastiques.

L'enveloppe 62 forme ainsi un deuxième niveau d'amortissement des moyens d'affichage numérique 5.

En référence à la figure 3, le panneau 4 sur lequel sont intégrés les moyens d'affichage numérique 5 comprend :
- un squelette 41 duquel est solidaire l'enveloppe 62,
- une peau 42 dans laquelle est noyé le squelette 41.

La peau 42 est notamment réalisée dans un matériau élastiquement déformable.

A titre d'exemple, le squelette 41 est réalisé en polypropylène injecté, et la peau 42 est réalisée en polypropylène expansé.

L'utilisation du polypropylène permet de conférer une bonne résistance mécanique au panneau 4 tout en limitant sa masse.

L'utilisation du polypropylène expansé permet de conférer, en plus d'une bonne rigidité, une souplesse au panneau 4.

La souplesse du panneau 4 forme alors un troisième niveau d'amortissement des moyens d'affichage numérique 5.

En effet, lorsqu'un effort est appliqué sur les moyens d'affichage numérique 5 il est alors partiellement absorbé par la souplesse de la peau 42.

Le système d'amortissement 6 permet d'autoriser un déplacement de l'écran 52 lorsqu'un effort trop important est exercé sur celui-ci, afin de limiter les dégâts que cet effort pourrait occasionner sur l'écran 52.

En d'autres termes, le système d'amortissement permet d'absorber des efforts ponctuels importants appliqués sur l'écran 52 au bénéfice de sa longévité et donc au bénéfice de la lisibilité des informations de livraison sur l'écran 52.

Le colis 1 selon l'invention offre donc un triple niveau d'amortissement des moyens d'affichage numérique 5 permettant la protection de l'écran 52.

Le premier niveau d'amortissement est réalisé par l'amortisseur 61 qui absorbe directement une partie des efforts appliqués sur l'écran 52.

Le deuxième niveau d'amortissement est réalisé par l'enveloppe 62 qui absorbe une autre partie des efforts appliqués sur l'écran 52 lorsque l'amortisseur 61 ne peut plus absorber d'efforts. L'amortisseur 61 agit alors comme un simple élément de transmission des efforts à la paroi arrière 51b de la coque 51.

Toutefois, le deuxième niveau d'amortissement est réalisé en parallèle du premier niveau d'amortissement. En effet, l'action de chaque niveau d'amortissement ne se fait pas de manière séquentielle mais de manière continue jusqu'à ce que le premier niveau d'amortissement soit saturé, auquel cas le premier niveau d'amortissement devient inactif.

Le troisième niveau d'amortissement est réalisé par le panneau 4 et notamment par la peau 42 du panneau 4 qui absorbe le reste des efforts appliqués sur l'écran 52. Lorsque l'effort ne peut pas être totalement absorbé par le système d'amortissement 6, c'est-à-dire par l'amortisseur 61 et par l'enveloppe 62, alors la peau 42 du panneau 4 se déforme élastiquement à son tour pour absorber le reste de l'effort appliqué sur l'écran 52.

Toutefois, ce triple niveau d'amortissement ne permet pas la protection du colis 1 contre les actes de vandalisme ou les chocs de grande ampleur (notamment lors d'un accident) auquel cas le colis peut être détruit de manière irréversible.

En variante l'ensemble d'affichage numérique 5 pourrait être agencé de telle sorte que la coque 51 contient, depuis la paroi avant 51a vers la paroi arrière 51b :
- la protection 55 en verre trempé ;
- l'écran 52 ;
- la plaque métallique 7 ;
- l'amortisseur 61, et
- la carte électronique 53.

## Revendications

1. Colis (1) pour transport d'objet, comprenant :
- une caisse (2) ayant un fond (21) et une bordure périphérique formée de panneaux (4) aboutés les uns aux autres,
- des moyens d'affichage numérique (5), permettant d'afficher des informations de livraison du colis (1),
les moyens d'affichage numérique (5) étant intégrés à l'un des panneaux (4) pour être accessibles depuis l'extérieur du colis (1),
**caractérisé en ce que** les moyens d'affichage numérique (5) comprenant :
- une coque (51) ayant une paroi avant (51a) côté extérieur du colis (1) et une paroi arrière côté (51b) intérieur du colis (1) ;
- un écran (52) monté mobile dans la coque (51) entre la paroi avant (51a) et la paroi arrière (51b), et
- un système d'amortissement (6) comprenant un amortisseur (61) intercalé entre l'écran (52) et la coque (51), pour amortir le déplacement de l'écran (52) depuis la paroi avant (51a) vers la paroi arrière (51b),
et **en ce que** le système d'amortissement (6) comprend également une enveloppe (62) élastiquement déformable entourant la coque (51), l'enveloppe (62) amortissant le déplacement des moyens d'affichage numérique (5) depuis l'extérieur du colis (1) vers l'intérieur, et inversement.

2. Colis (1) selon la revendication 1, **caractérisé en ce que** le panneau (4) sur lequel sont intégrés les moyens d'affichage numérique (5) comprend :
- un squelette (41) duquel est solidaire l'enveloppe (62),
- une peau (42) dans laquelle est noyé le squelette (41),
la peau (42) étant réalisée dans un matériau élastiquement déformable.

3. Colis (1) selon la revendication précédente, **caractérisé en ce que** la peau (42) est réalisée en polypropylène expansé.

4. Colis (1) selon l'une quelconque des revendications précédentes, **caractérisé en ce que** l'amortisseur (61) comprend une mousse compressible de type à absorption de chocs.

5. Colis (1) selon la revendication précédente, **caractérisé en ce que** la mousse compressible présente une dureté de type Shore O comprise entre 16 et 22.

6. Colis (1) selon l'une quelconque des revendications précédentes, **caractérisé en ce que** les moyens d'affichage numérique (5) comprennent également :
- une carte électronique (53) solidaire de la paroi arrière (51b) de la coque (51) ;
- une plaque métallique (7) s'étendant entre l'écran (52) et la carte électronique (53), et **en ce que** l'amortisseur (61) est intercalé entre la plaque métallique (7) et l'écran (52).

7. Colis (1) selon la revendication précédente, **caractérisé en ce que** la paroi arrière (51b) de la coque (51) présente des barres de renfort (512) faisant saillie vers l'intérieur de la coque (51), les barres de renfort (512) formant des supports de la carte électronique (53).

8. Colis (1) selon la revendication précédente, **caractérisé en ce que** les barres de renfort (512) sont positionnées sous la forme d'un quadrillage formant des logements de réceptions de composants électriques solidaires de la carte électronique (53).

9. Colis (1) selon l'une quelconque des revendications précédentes, **caractérisé en ce que** les moyens d'affichage (5) comprennent une protection (55) en verre trempé recouvrant l'écran (52), la protection (55) en verre trempé étant intercalée entre l'écran (52) et la paroi avant (51a) de la coque (51).

10. Colis (1) selon l'une quelconque des revendications précédentes, **caractérisé en ce que** l'enveloppe (62) est réalisée dans un matériau élastomère.

11. Colis (1) selon la revendication précédente, **caractérisé en ce que** le matériau élastomère est du type thermoplastique comprenant une dureté shore A comprise entre 25 et 35.

## Patentansprüche

1. Verpackung (1) zum Transport von Gegenständen, umfassend:
- einen Kasten (2) mit einem Boden (21) und einem umlaufenden Rand, der aus aneinanderstoßenden Platten (4) gebildet ist;
- digitale Anzeigemittel (5) zum Anzeigen von Lieferinformationen der Verpackung (1);
wobei die digitalen Anzeigemittel (5) in eine der Platten (4) integriert sind, um von außerhalb der Verpackung (1) zugänglich zu sein;
**dadurch gekennzeichnet, dass** die digitalen Anzeigemittel (5) umfassen:
• ein Gehäuse (51) mit einer außerseitigen vorderen Wand (51a) der Verpackung (1) und einer innenseitigen hinteren Wand (51b) der Verpackung (1);
• einen Bildschirm (52), der beweglich in dem Gehäuse (51) zwischen der vorderen Wand (51a) und der hinteren Wand (51b) angebracht ist;
• ein Dämpfungssystem (6) mit einem Dämpfer (61), der zwischen dem Bildschirm (52) und dem Gehäuse (51) angeordnet ist, um die Verlagerung des Bildschirms (52) von der vorderen Wand (51a) zur hinteren wand (51b) zu dämpfen;
und dadurch, dass das Dämpfungssystem (6) ebenfalls eine elastisch verformbare Hülle (62) umfasst, die das Gehäuse (51) umgibt, wobei die Hülle (62) die Verlagerung der digitalen Anzeigemittel (5) von außerhalb der Verpackung (1) nach innerhalb und umgekehrt dämpft.

2. Verpackung (1) nach Anspruch 1, **dadurch gekennzeichnet, dass** die Platte (4), auf der die digitalen Anzeigemittel (5) integriert sind, umfasst:
- ein Gerüst (41), mit dem die Hülle (62) fest verbunden ist,
- eine Haut (42), in die das Skelett (41) eingebettet ist,
wobei die Haut (42) aus einem elastisch verformbaren Material besteht.

3. Verpackung (1) nach vorherigem Anspruch, **dadurch gekennzeichnet, dass** die Haut (42) aus expandiertem Polypropylen besteht.

4. Verpackung (1) nach einem der vorherigen Ansprüche, **dadurch gekennzeichnet, dass** der Dämpfer (61) einen komprimierbaren Schaumstoff vom stoßabsorbierenden Typ umfasst.

5. Verpackung (1) nach vorherigem Anspruch, **dadurch gekennzeichnet, dass** der komprimierbare Schaumstoff eine Shore-Härte O zwischen 16 und 22 aufweist.

6. Verpackung (1) nach einem der vorherigen Ansprüche, **dadurch gekennzeichnet, dass** die digitalen Anzeigemittel (5) ebenfalls umfassen:
- eine mit der hinteren Wand (51b) des Gehäuses (51) fest verbundene Leiterplatte (53);
- eine Metallplatte (7), die sich zwischen dem Bildschirm (52) und der Leiterplatte (53) erstreckt, und dadurch, dass der Dämpfer (61) zwischen der Metallplatte (7) und dem Bildschirm (52) angeordnet ist.

7. Verpackung (1) nach vorherigem Anspruch, **dadurch gekennzeichnet, dass** die hintere Wand (51b) des Gehäuses (51) Verstärkungsstangen (512) aufweist, die in das Innere des Gehäuses (51) hineinragen, wobei die Verstärkungsstangen (512) Halterungen für die Leiterplatte (53) bilden.

8. Verpackung (1) nach vorherigem Anspruch, **dadurch gekennzeichnet, dass** die Verstärkungsstangen (512) in Form eines Gitters positioniert sind, das Aufnahmen für elektrische Bauteile bildet, die fest mit der Leiterplatte (53) verbunden sind.

9. Verpackung (1) nach einem der vorherigen Ansprüche, **dadurch gekennzeichnet, dass** die Anzeigemittel (5) einen Schutz (55) aus gehärtetem Glas umfassen, der den Bildschirm (52) abdeckt, wobei der Schutz (55) aus gehärtetem Glas zwischen dem Bildschirm (52) und der vorderen Wand (51a) des Gehäuses (51) angeordnet ist.

10. Verpackung (1) nach einem der vorherigen Ansprüche, **dadurch gekennzeichnet, dass** die Hülle (62) aus einem Elastomermaterial besteht.

11. Verpackung (1) nach vorherigem Anspruch, **dadurch gekennzeichnet, dass** das Elastomermaterial thermoplastisch ist und eine Shore-Härte A zwischen 25 und 35 aufweist.

## Claims

1. A parcel (1) for transporting an object, comprising:
- a case (2) having a base (21) and a peripheral edge formed of panels (4) abutting each other,
- digital display means (5), making it possible to display information on the delivery of the parcel (1),
the digital display means (5) being integrated into one of the panels (4) to be accessible from outside the parcel (1),
**characterized in that** the digital display means (5) comprise:
• a shell (51) having a front wall (51a) on the outside of the parcel (1) and a rear wall (51b) on the inside of the parcel (1);
• a screen (52) movably mounted in the shell (51) between the front wall (51a) and the rear wall (51b);
• a damping system (6) comprising a damper (61) interposed between the screen (52) and the shell (51), to dampen the displacement of the screen (52) from the front wall (51a) to the rear wall (51b),
and **in that** the damping system (6) also comprises an elastically deformable cover (62) surrounding the shell (51), the cover (62) damping the displacement of the digital display means (5) from the outside of the parcel (1) to the inside, and vice versa.

2. The parcel (1) according to claim 1, **characterized in that** the panel (4) on which the digital display means (5) are integrated comprises:
- a skeleton (41) to which the cover (62) is secured,
- a skin (42) in which the skeleton (41) is embedded,
the skin (42) being made of an elastically deformable material.

3. The parcel (1) according to the preceding claim, **characterized in that** the skin (42) is made of expanded polypropylene.

4. The parcel (1) according to any one of the preceding claims, **characterized in that** the damper (61) comprises a compressible foam of the shock-absorbing type.

5. The parcel (1) according to the preceding claim, **characterized in that** the compressible foam has a Shore O-type hardness comprised between 16 and 22.

6. The parcel (1) according to any one of the preceding claims, **characterized in that** the digital display means (5) also comprise:
- an electronic card (53) secured to the rear wall (51b) of the shell (51);
- a metal plate (7) extending between the screen (52) and the electronic card (53), and **in that** the damper (61) is interposed between the metal plate (7) and the screen (52).

7. The parcel (1) according to the preceding claim, **characterized in that** the rear wall (51b) of the shell (51) has reinforcing bars (512) protruding towards the inside of the shell (51), the reinforcing bars (512) forming supports for the electronic card (53).

8. The parcel (1) according to the preceding claim, **characterized in that** the reinforcing bars (512) are positioned in the form of a grid forming housings for receiving electrical components secured to the electronic card (53).

9. The parcel (1) according to any one of the preceding claims, **characterized in that** the display means (5) comprise a tempered glass protection (55) covering the screen (52), the tempered glass protection (55) being interposed between the screen (52) and the front wall (51a) of the shell (51).

10. The parcel (1) according to any one of the preceding claims, **characterized in that** the cover (62) is made of an elastomeric material.

11. The parcel (1) according to the preceding claim, **characterized in that** the elastomeric material is of the thermoplastic type comprising a Shore A hardness comprised between 25 and 35.
